# EUROPÄISCHE PATENTANMELDUNG

(11) **EP 4 527 530 A1**
(43) Veröffentlichungstag der Anmeldung: **26.03.2025**
(21) Anmeldenummer: 24198509.2
(22) Anmeldetag: 04.09.2024
(51) Int. Cl.: B23C 5/10

(54) **WERKZEUG ZUR SPANABHEBENDEN BEARBEITUNG EINES WERKSTÜCKS**

(30) Priorität: 14.09.2023 DE 102023124921
(71) Anmelder: MAPAL Fabrik für Präzisionswerkzeuge Dr. Kress KG, 73431 Aalen (DE)
(72) Erfinder: PECAT, Oliver, 73434 Aalen (DE)
(74) Vertreter: Kordel, Mattias

(57) **Zusammenfassung**

Die Erfindung betrifft ein Werkzeug (1) zur spanabhebenden Bearbeitung eines Werkstücks, aufweisend:
- einen Werkzeugschaft (3) mit einer Mittelachse, die von einer Umfangsrichtung umgriffen ist, und ein Wirk-Ende (5),
- mindestens eine Hauptschneide (9),
- mindestens eine erste Nebenschneidennut (11.1), die die mindestens eine Hauptschneide (9) unter Ausbildung von mindestens einer ersten Nebenschneide (13.1) unterbricht, wobei die mindestens eine erste Nebenschneidennut (11.1) eine erste Nutsteigung aufweist,
- mindestens eine zweite Nebenschneidennut (11.2), die die mindestens eine Hauptschneide (9) unter Ausbildung von mindestens einer zweiten Nebenschneide (13.2) unterbricht, wobei die mindestens eine zweite Nebenschneidennut (11.1) eine von der ersten Nutsteigung verschiedene zweite Nutsteigung aufweist, wobei
- die mindestens eine erste Nebenschneidennut (11.1) und die mindestens eine zweite Nebenschneidennut (11.1) dieselbe mindestens eine Hauptschneide (9) unterbrechen.

## Beschreibung

Die Erfindung betrifft ein Werkzeug, insbesondere Fräswerkzeug, zur spanabhebenden Bearbeitung eines Werkstücks, wobei das Werkstück einen Faserverbundwerkstoff aufweist oder aus einem Faserverbundwerkstoff gebildet ist.

Faserverbundwerkstoffe weisen eine relativ hohe mechanische Stabilität bei - im Vergleich zu Stahl - einer relativ geringen Dichte auf. Sie sind somit relativ gut für den Leichtbau geeignet. Bei der mechanischen Bearbeitung, insbesondere beim Fräsen und Bohren, kommt es während der Bearbeitung einer Werkstückoberfläche jedoch zu Ausfransungen, da nicht alle Fasern sauber abgetrennt werden. Die nicht sauber abgetrennten Fasern - auch als Faserüberstände bezeichnet - sind einer qualitativ hochwertigen Oberfläche abträglich. Ferner kann es bei Anlageflächen, wenn beispielsweise ein Bauteil aus einem Faserverbundwerkstoff in einer Baugruppe montiert wird, zu Montageungenauigkeiten kommen, da die Faserüberstände ein präzises Montieren mittels der Anlageflächen des Bauteils erschweren. Es ist bekannt, mittels eines Kompressionsschnitts eine bessere Werkstückoberfläche herzustellen, da - im Vergleich zu einem Verfahren ohne Kompressionsschnitt - ein größerer Teil der Fasern sauber abgetrennt werden kann. Ein solcher Kompressionsfräser für einen Kompressionsschnitt ist aus US 9,849,522 B2 bekannt. Der Kompressionsfräser weist in Umfangsrichtung abwechselnd geneigte Schneiden mit zugeordneten Schneidenspannuten auf. Dazwischen sind - in Umfangsrichtung gesehen - zusätzliche, im Vergleich zu den Schneidenspannuten relativ große Hauptspannuten angeordnet. Mittels des Kompressionsfräsers werden die Fasern nicht nur mit einer Schneidkraft beaufschlagt, die in Drehrichtung des Werkzeugs orientiert ist, sondern es wird zusätzlich eine Schneidkraft parallel zu einer Mittelachse - auch als Axialkraft bezeichnet - des Fräsers erzeugt, die aufgrund der abwechselnd geneigten Schneiden abwechselnd in Richtung eines Wirk-Endes des Kompressionsfräsers oder in Richtung eines Einspann-Endes des Kompressionsfräsers wirkt. Ein solcher Fräser neigt jedoch aufgrund dieser abwechselnden Kräfte zu Vibrationen. Ferner können auch mit einem solchen Kompressionsfräser nicht alle Fasern sauber abgetrennt werden. Zur Standzeiterhöhung wäre es wünschenswert, solche Fräser mit einem Diamantwerkstoff, insbesondere einem CVD-Diamantwerkstoff, zu beschichten. Die Vibrationen führen jedoch zu einem relativ hohen Verschleiß der Beschichtung, bis hin zum Abplatzen derselben.

Der Erfindung liegt daher die Aufgabe zugrunde, ein Werkzeug, insbesondere Fräswerkzeug, zur spanabhebenden Bearbeitung eines Werkstücks, wobei das Werkstück einen Faserverbundwerkstoff aufweist oder aus einem Faserverbundwerkstoff gebildet ist, zu schaffen, wobei die genannten Nachteile reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten bevorzugten Ausführungsformen.

Die Aufgabe wird insbesondere gelöst, indem ein Werkzeug, insbesondere Fräswerkzeug, zur spanabhebenden Bearbeitung eines Werkstücks, wobei das Werkstück einen Faserverbundwerkstoff aufweist oder aus einem Faserverbundwerkstoff gebildet ist, geschaffen wird. Das Werkzeug weist einen Werkzeugschaft, insbesondere mit einem Schaftende, mit einer Mittelachse, die von einer Umfangsrichtung umgriffen ist, und ein Wirk-Ende auf. Das Werkzeug weist ferner mindestens eine, insbesondere an einer Mantelfläche des Werkzeugschafts angeordnete, Hauptschneide auf. Das Werkzeug weist ferner mindestens eine erste Nebenschneidennut und mindestens eine zweite Nebenschneidennut auf. Die mindestens eine erste Nebenschneidennut unterbricht die mindestens eine Hauptschneide unter Ausbildung von mindestens einer ersten Nebenschneide. Die mindestens eine erste Nebenschneidennut weist eine erste Nutsteigung auf. Die mindestens eine zweite Nebenschneidennut unterbricht die mindestens eine Hauptschneide unter Ausbildung von mindestens einer zweiten Nebenschneide. Die mindestens eine zweite Nebenschneidennut weist eine von der ersten Nutsteigung verschiedene zweite Nutsteigung auf. Die mindestens eine erste Nebenschneidennut und die mindestens eine zweite Nebenschneidennut unterbrechen dieselbe mindestens eine Hauptschneide.

Mittels der besonderen Anordnung der Hauptschneide, der mindestens einen ersten Nebenschneide und der mindestens einen zweiten Nebenschneide, werden vorteilhaft Vibrationen während der spanenden Bearbeitung reduziert, vorzugsweise vermieden. Insbesondere sind jeweils eine erste Nebenschneide und eine zweite Nebenschneide gleichzeitig in Eingriff, wodurch die abwechselnd wirkende Axialkraft reduziert, vorzugsweise vermieden wird. Aufgrund der reduzierten Vibrationen ist der Verschleiß einer Beschichtung mit einem Diamantwerkstoff, insbesondere einem CVD-Diamantwerkstoff, reduziert. Die beiden Nebenschneiden führen insbesondere zu einer besseren Abtrennung der Fasern, sodass eine bessere Werkstückoberfläche erhalten wird.

Unter einem Faserverbundwerkstoff wird im Kontext der vorliegenden technischen Lehre insbesondere ein Verbundwerkstoff verstanden, der eine Matrix aufweist, in die Fasern eingebettet sind. Insbesondere ist die Matrix ein Füll- und/oder Klebstoff zwischen den Fasern.

Unter Fräsen wird hier insbesondere ein spanabhebendes Bearbeitungsverfahren mit rotierendem Werkzeug verstanden. Die Schneiden des Fräswerkzeugs erzeugen dabei die Schnittbewegung durch ihre Drehung um die Mittelachse des Fräswerkzeugs als Rotationsachse. Zugleich wird eine Vorschubbewegung - insbesondere senkrecht zur Mittelachse - zwischen dem Fräswerkzeug und einem bearbeiteten Werkstück bewirkt. Dabei kann die Vorschubbewegung am Fräswerkzeug und/oder am Werkstück ausgeführt werden.

Als spanabhebend wird im Kontext der vorliegenden technische Lehre insbesondere eine mechanische Abtrennung von Werkstückteilen des Werkstücks verstanden. Als Werkstückteile kommen insbesondere Späne, Faserabschnitte der Fasern des Faserverbundwerkstoffs und Partikel der Matrix des Faserverbundwerkstoffes in Betracht.

Unter einer Werkzeugstirn - auch als Stirnseite bezeichnet - wird insbesondere eine bestimmungsgemäß einem zu bearbeitenden Werkstück zugewandte Front eines Werkzeugkörpers des Werkzeugs verstanden. Unter einem Schaftende wird insbesondere ein bestimmungsgemäß dem zu bearbeitenden Werkstück abgewandtes Ende des Werkzeugs verstanden, welches der Werkzeugstirn entlang der Mittelachse gegenüberliegt. Das Schaftende ist in bevorzugter Ausgestaltung eingerichtet, um mit einer Werkzeugmaschine oder einem Adapter oder dergleichen verbunden zu werden. Insbesondere kann es sich bei dem Schaftende um ein Einspann-Ende oder einen Einspannschaft des Werkzeugs handeln.

Eine Axialrichtung erstreckt sich in Richtung der Mittelachse, das heißt, der bestimmungsgemäßen Rotationsachse des Fräswerkzeugs. Die Umfangsrichtung umgreift die Mittelachse konzentrisch. Eine Radialrichtung steht senkrecht auf der Werkzeugmittelachse.

Insbesondere erstreckt sich die mindestens eine Hauptschneide entlang eines Mittelachsenabschnitts der Mittelachse. In einer Ausführungsform ist die Erstreckung ausgehend von dem Wirk-Ende entlang der Mittelachse verwirklicht. In einer anderen Ausführungsform ist die Erstreckung ausgehend von einer von dem Wirk-Ende in Richtung eines Schaftendes, insbesondere Einspann-Endes, beabstandeten Ebene entlang der Mittelachse in Richtung des Schaftendes, insbesondere Einspann-Endes, verwirklicht.

Unter einer "Erstreckung in Richtung des Schaftendes" ist insbesondere zu verstehen, dass sich das derart bezeichnete Element in Richtung des Schaftendes erstreckt, das Element muss dabei nicht zwingend bis an das Schaftende heranreichen, sondern kann vielmehr in einem Abstand zu dem Schaftende enden.

Dass die erste Nutsteigung und die zweite Nutsteigung verschieden sind, bedeutet im Kontext der vorliegenden technischen Lehre insbesondere, dass sie betragsmäßig und/oder vorzeichenmäßig - bezogen auf die Mittelachse - verschieden sind.

In einer Ausführungsform weist das Werkzeug mindestens eine Stirnnebenschneide, insbesondere acht Stirnnebenschneiden, auf, die an dem Wirk-Ende, insbesondere an der Stirnseite des Werkzeugschafts, angeordnet ist. Die mindestens eine Stirnnebenschneide kommt in Eingriff, wenn das Werkzeug entlang der Mittelachse in das Werkstück zugestellt wird. Insbesondere wird das Werkzeug während der Zustellung entlang der Mittelachse in einer weiteren, insbesondere quer zu der Mittelachse orientierten, Richtung verlagert, sodass eine rampenförmige Zustellung in das Werkstück realisiert wird. Insbesondere folgt das Werkzeug während dessen Zustellung in das Werkstück einer kreisförmigen Bahnkurve, insbesondere einer orbitalen Bahnkurve, insbesondere einer helixförmigen Bahnkurve.

In einer Ausführungsform ist das Werkzeug, insbesondere eine Schneide, ausgewählt aus der mindestens einen Hauptschneide, der mindestens einen ersten Nebenschneide, der mindestens einen zweiten Nebenschneide und der mindestens einen Stirnnebenschneide, mit einer Schutzschicht, insbesondere einer CVD-Schutzschicht, insbesondere einer Diamantbeschichtung, insbesondere einer CVD-Diamantbeschichtung, beschichtet. Die Schutzschicht ist insbesondere mittels eines chemischen Gasphasenabscheidungsverfahrens (abgekürzt: CVD-Verfahren, Chemical Vapour Deposition) auf das Werkzeug aufgebracht. Insbesondere ist das Werkzeug mittels eines chemischen Gasphasenabscheidungsverfahrens unter Ausbildung der Schutzschicht beschichtet. Insbesondere wird eine Standzeit des Werkzeugs mittels der Schutzschicht erhöht.

In einer Ausführungsform ist die mindestens eine Hauptschneide parallel zu der Mittelachse angeordnet. In einer anderen Ausführungsform weist die mindestens eine Hauptschneide eine Hauptschneidensteigung auf. Die Hauptschneidensteigung beträgt - bezogen auf die Mittelachse - insbesondere von 0,5° bis 5°, insbesondere von 0,75° bis 4°, insbesondere von 1° bis 3°, insbesondere 2°. Insbesondere umgreift die mindestens eine Hauptschneide bereichsweise die Mittelachse schraubenlinienförmig.

In einer Ausführungsform sind die erste Nutsteigung und die zweite Nutsteigung gegensinnig, weisen also insbesondere verschiedene Vorzeichen bezogen auf die Mittelachse auf. Insbesondere sind die erste Nutsteigung und die zweite Nutsteigung - bezogen auf die Mittelachse - betragsmäßig gleich und/oder die erste Nutsteigung und die zweite Nutsteigung sind symmetrisch zu einer auf der Hauptschneide senkrecht stehenden, insbesondere in azimutaler Richtung weisenden Normalen.

In einer Ausführungsform weist das Werkzeug mindestens eine Hauptnut auf, die der mindestens einen Hauptschneide zugeordnet ist.

Gemäß einer Weiterbildung der Erfindung ist vorgesehen, dass das Werkzeug eine Mehrzahl von Hauptschneiden als die mindestens eine Hauptschneide aufweist, die entlang der Umfangsrichtung voneinander beabstandet angeordnet sind. Das Werkzeug weist ferner eine Mehrzahl von Hauptnuten auf, die entlang der Umfangsrichtung voneinander beabstandet angeordnet sind. Die Hauptnuten und die Hauptschneiden sind einander paarweise zugeordnet. Insbesondere wird dadurch ein mögliches Zeitspanvolumen des Werkzeugs erhöht.

In einer Ausführungsform weist das Werkzeug von 4 bis 12, insbesondere von 6 bis 10, insbesondere von 7 bis 9, insbesondere 8 Hauptschneiden auf. In einer Ausführungsform ist das Werkzeug achsensymmetrisch zu der Mittelachse ausgebildet.

Gemäß einer Weiterbildung der Erfindung ist vorgesehen, dass die mindestens eine Hauptschneide als die mindestens eine erste Nebenschneidennut eine Mehrzahl von ersten Nebenschneidennuten aufweist, wobei die Mehrzahl von ersten Nebenschneidennuten entlang der Hauptschneide beabstandet voneinander angeordnet ist. Die Hauptschneide weist als die mindestens eine zweite Nebenschneidennut eine Mehrzahl von zweiten Nebenschneidennuten auf, wobei die Mehrzahl von zweiten Nebenschneidennuten entlang der Hauptschneide beabstandet voneinander angeordnet ist. Insbesondere ist eine Eingriffscharakteristik des Werkzeugs entlang des Werkzeugschafts, insbesondere entlang der Mittelachse, konstant.

Gemäß einer Weiterbildung der Erfindung ist vorgesehen, dass der mindestens einen Hauptschneide eine Freifläche zugeordnet ist. Die Freifläche fällt in Umfangsrichtung, insbesondere entgegen einer Schneiddrehrichtung, ausgehend von der zugeordneten Hauptschneide in Richtung zur Mittelachse, insbesondere nach radial innen, ab. In einer Ausführungsform ist jeder Hauptschneide der mindestens einen Hauptschneide eine Freifläche zugeordnet, wobei insbesondere jede Freifläche ausgehend von der ihr zugeordneten Hauptschneide in Richtung zur Mittelachse, insbesondere nach radial innen, abfällt.

Gemäß einer Weiterbildung der Erfindung ist vorgesehen, dass sich die mindestens eine erste Nebenschneidennut, insbesondere die Mehrzahl von ersten Nebenschneidennuten, und die mindestens eine zweite Nebenschneidennut, insbesondere die Mehrzahl von zweiten Nebenschneidennuten, auf der mindestens einen Hauptschneide kreuzen. Vorteilhaft unterbrechen jeweils eine erste Nebenschneide und eine zweite Nebenschneide die mindestens eine Hauptschneide an einer selben Hauptschneidenstelle. Eine solche Anordnung führt vorteilhaft zu einer besonders vibrationsarmen Zerspanung.

Gemäß einer Weiterbildung der Erfindung ist vorgesehen, dass sich die mindestens eine erste Nebenschneidennut und die mindestens eine zweite Nebenschneidennut derart kreuzen, dass mindestens eine erste Hauptschneidenspitze gebildet ist, die bereichsweise von einer Spanfläche der zugeordneten Hauptschneide begrenzt ist. Insbesondere werden mittels der mindestens einen ersten Hauptschneidenspitze weitere Faserüberstände abgetrennt, was zu einer verbesserten Oberflächenqualität führen kann.

Gemäß einer Weiterbildung der Erfindung ist vorgesehen, dass sich die mindestens eine erste Nebenschneidennut und die mindestens eine zweite Nebenschneidennut derart kreuzen, dass mindestens eine zweite Hauptschneidenspitze gebildet ist, die bereichsweise von einer der Spanfläche gegenüberliegenden und an die Freifläche angrenzenden Rückfläche der zugeordneten Hauptschneide begrenzt ist. Insbesondere werden mittels der mindestens einen zweiten Hauptschneidenspitze Faserüberstände für eine in Drehrichtung nacheilende Hauptschneide ausgerichtet, durch die sie dann abgetrennt werden können, was ebenfalls zu einer verbesserten Oberflächenqualität führen kann.

In einer Ausführungsform ist die mindestens eine erste Hauptschneidenspitze und/oder die mindestens eine zweite Hauptschneidenspitze, mit einer Schutzschicht, insbesondere einer CVD-Schutzschicht, insbesondere einer Diamantbeschichtung, insbesondere einer CVD-Diamantbeschichtung, beschichtet. Die Schutzschicht ist insbesondere mittels eines chemischen Gasphasenabscheidungsverfahrens (abgekürzt: CVD-Verfahren) auf das Werkzeug aufgebracht. Insbesondere ist das Werkzeug mittels eines chemischen Gasphasenabscheidungsverfahrens unter Ausbildung der Schutzschicht beschichtet. Insbesondere wird eine Standzeit des Werkzeugs mittels der Schutzschicht erhöht.

In einer Ausführungsform ist das Wirk-Ende vollständig mit einer Schutzschicht, insbesondere einer CVD-Schutzschicht, insbesondere einer Diamantbeschichtung, insbesondere einer CVD-Diamantbeschichtung, beschichtet.

Gemäß einer Weiterbildung der Erfindung ist vorgesehen, dass einer ersten Hauptschneide der mindestens eine Hauptschneide eine erste Folge von axial einander, insbesondere unmittelbar, benachbarten Erstfolge-Nebenschneidennuten, ausgewählt aus den ersten Nebenschneidennuten und den zweiten Nebenschneidennuten, zugeordnet ist, wobei die Erstfolge-Nebenschneidennuten in Axialrichtung mindestens durch einen ersten Nutabstand voneinander beabstandet sind. Einer der ersten Hauptschneide in Umfangsrichtung, insbesondere direkt, insbesondere unmittelbar, insbesondere in oder entgegen einer Schneiddrehrichtung, benachbarten zweiten Hauptschneide der mindestens einen Hauptschneide ist eine zweite Folge von axial einander, insbesondere unmittelbar, benachbarten Zweitfolge-Nebenschneidennuten, ausgewählt aus den ersten Nebenschneidennuten und den zweiten Nebenschneidennuten, zugeordnet, wobei die Zweitfolge-Nebenschneidennuten in Axialrichtung mindestens durch einen zweiten Nutabstand voneinander beabstandet sind. Die erste Folge und die zweite Folge sind in Axialrichtung um einen Versatzabstand zueinander versetzt, wobei der Versatzabstand kleiner ist als der erste Nutabstand und der zweite Nutabstand. Insbesondere führt diese Anordnung zu einer besonders guten Abtrennung von Faserüberstanden an der Werkstückoberfläche.

Eine Folge, ausgewählt aus der ersten Folge und der zweiten Folge, umfasst mindestens zwei Nebenschneidennuten, insbesondere zwei erste Nebenschneidennuten oder zwei zweite Nebenschneidennuten oder zwei Kreuzungsbereiche, in denen sich jeweils eine erste Nebenschneidennut und eine zweite Nebenschneidennut kreuzen.

In einer Ausführungsform sind der erste Nutabstand und der zweite Nutabstand gleich, insbesondere betragsmäßig gleich.

Gemäß einer Weiterbildung der Erfindung ist vorgesehen, dass die mindestens eine Hauptschneide aus dem Werkzeugschaft unter Ausbildung der zugeordneten Hauptnut herausgearbeitet, insbesondere herausgeschliffen, ist.

In einer Ausführungsform ist die mindestens eine erste Nebenschneidennut unter Ausbildung der mindestens einen ersten Nebenschneide und/oder die mindestens eine zweite Nebenschneidennut unter Ausbildung der mindestens einen zweiten Nebenschneide aus dem Werkzeugschaft herausgearbeitet, insbesondere herausgeschliffen.

In einer Ausführungsform ist die mindestens eine Stirnnebenschneide aus dem Werkzeugschaft herausgearbeitet, insbesondere herausgeschliffen.

Die Erfindung wird im Folgenden anhand der Zeichnung näher erläutert. Dabei zeigen:
- Fig. 1: eine schematische Darstellung eines Ausführungsbeispiels eines Werkzeugs zur spanabhebenden Bearbeitung eines Werkstücks in einer ersten Ansicht,
- Fig. 2: eine schematische, vergrößerte Darstellung einer ersten Nebenschneidennut und einer zweiten Nebenschneidennut des Werkzeugs gemäß Figur 1,
- Fig. 3: eine schematische Darstellung des Werkzeugs gemäß Figur 1 in einer zweiten Ansicht,
- Fig. 4: eine schematische, vergrößerte Darstellung eines ersten Hauptschneidenspitze und einer zweiten Hauptschneidenspitze des Werkzeugs gemäß Figur 3,
- Fig. 5: eine schematische Darstellung einer Hauptschneide des Werkzeugs gemäß Figur 1, und
- Fig. 6: eine schematische, vergrößerte Darstellung eines Versatzabstands einer ersten Folge und einer zweiten Folge des Werkzeugs gemäß Figur 1.

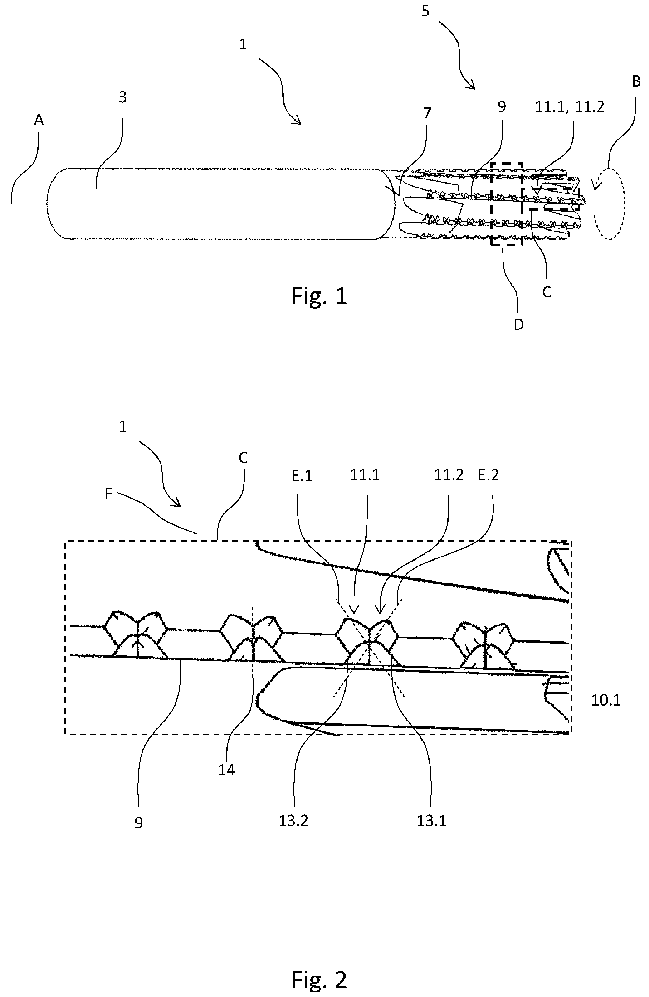

**Figur 1** zeigt eine schematische Darstellung eines Ausführungsbeispiels eines Werkzeugs 1 zur spanabhebenden Bearbeitung eines nicht dargestellten Werkstücks, wobei das Werkstück einen Faserverbundwerkstoff aufweist oder aus einem Faserverbundwerkstoff gebildet ist. Das Werkzeug 1 ist in einer ersten - Seiten- - Ansicht dargestellt.

Das Werkzeug 1 weist einen Werkzeugschaft 3, insbesondere mit einem Schaftende, mit einer - durch eine erste strichlierte Linie A dargestellten - Mittelachse, die von einer - durch einen Pfeil B dargestellten - Umfangsrichtung umgriffen ist, und ein Wirk-Ende 5 auf. Das Werkzeug 1 weist ferner mindestens eine, insbesondere an einer Mantelfläche 7 des Werkzeugschafts 3 angeordnete Hauptschneide 9 auf. Das Werkzeug 1 weist ferner mindestens eine erste Nebenschneidennut 11.1 und mindestens eine zweite Nebenschneidennut 11.2 auf.

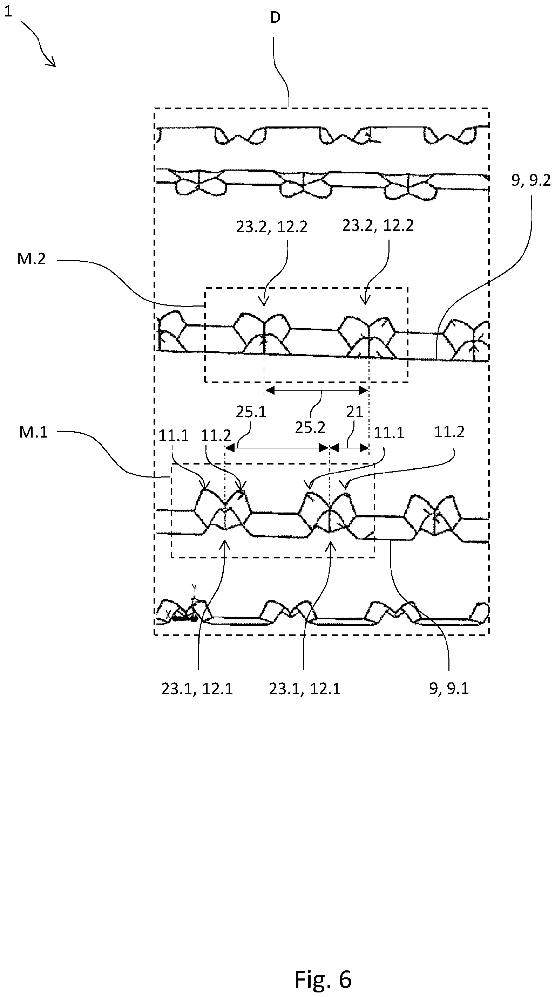

Ein strichlierter erster Ausschnitt C ist in Figur 2 vergrößert dargestellt. Ein strichlierter zweiter Ausschnitt D ist in Figur 6 vergrößert dargestellt.

**Figur 2** zeigt eine schematische Darstellung der ersten Nebenschneidennut 11.1 und der zweiten Nebenschneidennut 11.2 des Werkzeugs 1 gemäß des ersten Ausschnitts C in Figur 1 in einer vergrößerten Ansicht.

Dabei sind gleiche und funktionsgleiche Elemente in allen Figuren mit gleichen Bezugszeichen versehen, sodass insoweit jeweils auf die vorangegangene Beschreibung verwiesen wird.

Die erste Nebenschneidennut 11.1 - deren Längserstreckung mit einer zweiten strichlierten Linie E.1 dargestellt ist - unterbricht die Hauptschneide 9 unter Ausbildung einer ersten Nebenschneide 13.1. Die erste Nebenschneidennut 11.1 weist eine erste Nutsteigung auf. Die zweite Nebenschneidennut 11.2 - deren Längserstreckung mit einer dritten strichlierten Linie E.2 dargestellt ist - unterbricht die Hauptschneide 9 unter Ausbildung einer zweiten Nebenschneide 13.2. Die mindestens eine zweite Nebenschneidennut 11.2 weist eine von der ersten Nutsteigung verschiedene zweite Nutsteigung auf. Die mindestens eine erste Nebenschneidennut 11.1 und die mindestens eine zweite Nebenschneidennut 11.2 unterbrechen dieselbe mindestens eine Hauptschneide 9.

Die erste Nutsteigung und die zweite Nutsteigung sind gegensinnig und - bezogen auf die Mittelachse A (vgl. Fig. 1) - betragsmäßig gleich und/oder symmetrisch zu einer auf der Hauptschneide 9 senkrecht stehenden, insbesondere in azimutaler Richtung weisenden, strichliert dargestellten Normalen 14.

In diesem Ausführungsbeispiel ist vorgesehen, dass sich die mindestens eine erste Nebenschneidennut 11.1, insbesondere die Mehrzahl von ersten Nebenschneidennuten 11.1, und die mindestens eine zweite Nebenschneidennut 11.2, insbesondere die Mehrzahl von zweiten Nebenschneidennuten 11.2, auf der mindestens einen Hauptschneide 9 - am Kreuzungspunkt der zweiten strichlierten Linie E.1 mit der der dritten strichlierten Linie E.2 - kreuzen.

In diesem Ausführungsbeispiel sind die mindestens eine erste Nebenschneidennut 11.1 unter Ausbildung der mindestens einen ersten Nebenschneide 13.1 und die mindestens eine zweite Nebenschneidennut 11.2 unter Ausbildung der mindestens einen zweiten Nebenschneide 13.2 aus dem hier nicht dargestellten Werkzeugschaft 3 herausgearbeitet, insbesondere herausgeschliffen.

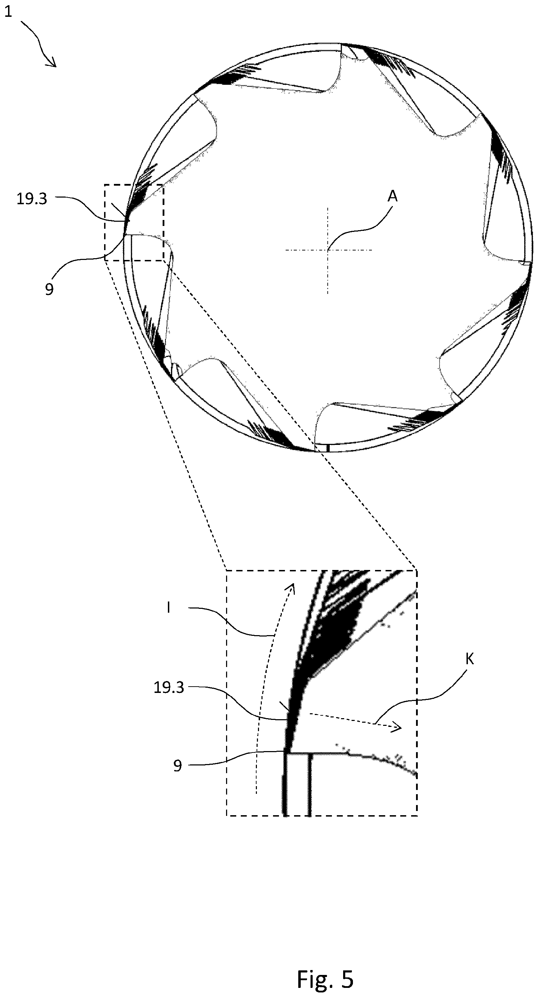

Eine Schnittansicht der Hauptschneide 9 des Werkzeugs 1 entlang einer vierten strichlierten Linie F ist in Figur 5 dargestellt.

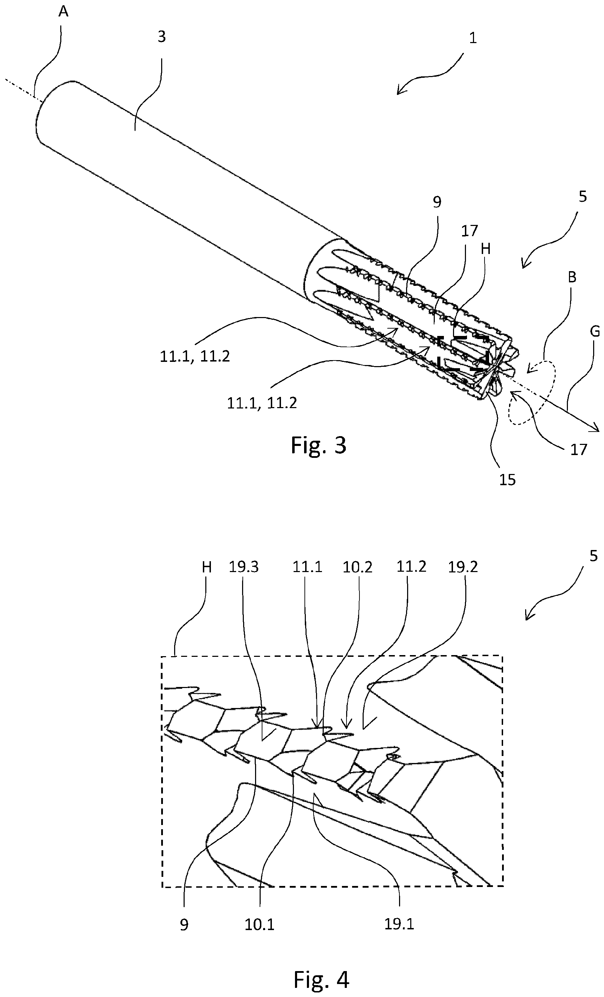

**Figur 3** zeigt eine schematische Darstellung des Werkzeugs 1 gemäß Figur 1 in einer zweiten - isometrischen - Ansicht.

In diesem Ausführungsbeispiel weist das Werkzeug 1 mindestens eine - hier acht - Stirnnebenschneide/n 15 auf, die an dem Wirk-Ende 5, insbesondere an einer Stirnseite 17 des Werkzeugschafts 3, angeordnet ist/sind. Die mindestens eine Stirnnebenschneide 15 kommt in Eingriff, wenn das Werkzeug 1 entlang der Mittelachse A - in Richtung eines Pfeils G - in das Werkstück zugestellt wird. Insbesondere wird das Werkzeug 1 während der Zustellung entlang der Mittelachse A in einer weiteren, insbesondere quer zu der Mittelachse orientierten, Richtung verlagert, sodass eine rampenförmige Zustellung in das Werkstück realisiert wird. Insbesondere folgt das Werkzeug 1 während dessen Zustellung in das Werkstück einer kreisförmigen Bahnkurve, insbesondere einer orbitalen Bahnkurve, insbesondere einer helixförmigen Bahnkurve.

In diesem Ausführungsbeispiel weist die mindestens eine Hauptschneide 9 eine Hauptschneidensteigung auf. Die Hauptschneidensteigung beträgt - bezogen auf die Mittelachse A - insbesondere von 0,5° bis 5°, insbesondere von 0,75° bis 4°, insbesondere von 1° bis 3°, insbesondere 2°. Insbesondere umgreift die mindestens eine Hauptschneide 9 bereichsweise die Mittelachse A schraubenlinienförmig. In einer anderen Ausführungsform ist die mindestens eine Hauptschneide 9 parallel zu der Mittelachse A angeordnet.

In diesem Ausführungsbeispiel ist vorgesehen, dass das Werkzeug 1 eine Mehrzahl von Hauptschneiden 9 als die mindestens eine Hauptschneide 9 aufweist, die entlang der Umfangsrichtung B voneinander beabstandet angeordnet sind. Das Werkzeug 1 weist ferner eine Mehrzahl von Hauptnuten 17 auf, die entlang der Umfangsrichtung B voneinander beabstandet angeordnet sind. Die Hauptnuten 17 und die Hauptschneiden 9 sind einander paarweise zugeordnet.

In diesem Ausführungsbeispiel weist das Werkzeug 1 genau acht Hauptschneiden 9 auf. In einer anderen Ausführungsform weist das Werkzeug 1 von 4 bis 12, insbesondere von 6 bis 10, insbesondere von 7 bis 9 Hauptschneiden 9 auf. In dieser Ausführungsform ist das Werkzeug 1 achsensymmetrisch zu der Mittelachse A ausgebildet.

In diesem Ausführungsbeispiel ist vorgesehen, dass die mindestens eine Hauptschneide 9 als die mindestens eine erste Nebenschneidennut 11.1 eine Mehrzahl von ersten Nebenschneidennuten 11.1- von denen nur zwei mit einem Bezugszeichen versehen sind - aufweist, wobei die Mehrzahl von ersten Nebenschneidennuten 11.1 entlang der Hauptschneide 9 beabstandet voneinander angeordnet ist. Die Hauptschneide 9 weist als die mindestens eine zweite Nebenschneidennut 11.2 eine Mehrzahl von zweiten Nebenschneidennuten 11.2 auf - von denen nur zwei mit einem Bezugszeichen versehen sind -, wobei die Mehrzahl von zweiten Nebenschneidennuten 11.2 entlang der Hauptschneide 9 beabstandet voneinander angeordnet ist.

In diesem Ausführungsbeispiel ist vorgesehen, dass die Hauptschneiden 9 aus dem Werkzeugschaft 3 unter Ausbildung der Hauptnuten 17 herausgearbeitet, insbesondere herausgeschliffen, sind.

Der strichliert dargestellte dritte Ausschnitt H ist in Figur 4 vergrößert dargestellt.

**Figur** 4 zeigt eine schematische, vergrößerte Darstellung einer ersten Hauptschneidenspitze 10.1 und einer zweiten Hauptschneidenspitze 10.2 des Werkzeugs 1 gemäß des Ausschnitts H in Figur 3.

In diesem Ausführungsbeispiel ist vorgesehen, dass sich die mindestens eine erste Nebenschneidennut 11.1 und die mindestens eine zweite Nebenschneidennut 11.2 derart kreuzen, dass mindestens eine erste Hauptschneidenspitze 10.1 gebildet ist, die bereichsweise von einer Spanfläche 19.1 der zugeordneten Hauptschneide 9 begrenzt ist.

In diesem Ausführungsbeispiel ist vorgesehen, dass sich die mindestens eine erste Nebenschneidennut 11.1 und die mindestens eine zweite Nebenschneidennut 11.2 derart kreuzen, dass mindestens eine zweite Hauptschneidenspitze 10.2 gebildet ist, die bereichsweise von einer der Spanfläche 19.1 gegenüberliegenden und an eine Freifläche 19.3 angrenzenden Rückfläche 19.2 der zugeordneten Hauptschneide 9 begrenzt ist.

**Figur** 5 zeigt eine schematische Darstellung der Hauptschneide 9 des Werkzeugs 1 in der Schnittebene entlang der strichlierten Linie F gemäß Figur 2.

Den Hauptschneiden 9 sind jeweils die Freiflächen 19.3 zugeordnet. Beispielhaft ist hier eine einzige Hauptschneide 9 mit ihrer Freifläche 19.3 vergrößert dargestellt, wobei die nachfolgende Beschreibung auch für die Mehrzahl von Hauptschneiden 9 mit ihren jeweiligen Freiflächen 19.3 gilt. Die Freiflächen 19.3 fallen in einer durch den Pfeil I dargestellten, entgegen einer Schneiddrehrichtung orientierten Richtung, ausgehend von den Hauptschneiden 9 in einer - durch den Pfeil K dargestellten - Radialrichtung zur Mittelachse A, insbesondere nach radial innen, ab.

**Figur** 6 zeigt eine schematische Darstellung eines Versatzabstands 21 einer ersten Folge 23.1 und einer zweiten Folge 23.2 des Werkzeugs 1 gemäß des zweiten Ausschnitts D in Figur 1 in einer vergrößerten Ansicht.

In diesem Ausführungsbeispiel ist vorgesehen, dass einer ersten Hauptschneide 9.1 der mindestens einen Hauptschneide 9 eine - durch ein strichliertes erstes Rechteck M.1 eingefasste - erste Folge 23.1 von axial einander, insbesondere unmittelbar, benachbarten Erstfolge-Nebenschneidennuten 12.1, ausgewählt aus den ersten Nebenschneidennuten 11.1 und den zweiten Nebenschneidennuten 11.2, zugeordnet ist, wobei die Erstfolge-Nebenschneidennuten 12.1 in Axialrichtung mindestens durch einen - durch eine Bemaßungslinie dargestellten - ersten Nutabstand 25.1 voneinander beabstandet sind. Einer der ersten Hauptschneide 9.1 in Umfangsrichtung, insbesondere direkt, insbesondere unmittelbar, insbesondere in oder entgegen einer Schneiddrehrichtung, benachbarten zweiten Hauptschneide 9.2 der mindestens einen Hauptschneide 9 ist eine - durch ein strichliertes zweites Rechteck M.2 eingefasste - zweite Folge 23.2 von axial einander, insbesondere unmittelbar, benachbarten Zweitfolge-Nebenschneidennuten 12.2, ausgewählt aus den ersten Nebenschneidennuten 11.1 und den zweiten Nebenschneidennuten 11.2 - die hier nicht mit eigenen Bezugszeichen versehen sind, die sich j edoch aus den Bezugszeichen der ersten Hauptschneide 9.1 ergeben -, zugeordnet, wobei die Zweitfolge-Nebenschneidennuten 12.2 in Axialrichtung mindestens durch einen - durch eine weitere Bemaßungslinie dargestellten - zweiten Nutabstand 25.2 voneinander beabstandet sind. Die erste Folge 23.1 und die zweite Folge 23.2 sind in Axialrichtung um einen - durch eine dritte Bemaßungslinie dargestellten - Versatzabstand 21 zueinander versetzt, wobei der Versatzabstand 21 kleiner ist als der erste Nutabstand 25.1 und der zweite Nutabstand 25.2. In dieser Ausführungsform sind der erste Nutabstand 25.1 und der zweite Nutabstand 25.2 gleich.

Eine Folge, ausgewählt aus der ersten Folge 23.1 und der zweiten Folge 23.2, umfasst mindestens zwei Nebenschneidennuten, insbesondere zwei erste Nebenschneidennuten 11.1 oder zwei zweite Nebenschneidennuten 11.2 oder - wie dargestellt - zwei Kreuzungsbereiche (vgl. Figur2: Kreuzungspunkt von E.1 und E.2), in denen sich jeweils eine erste Nebenschneidennut 11.1 und eine zweite Nebenschneidennut 11.2 kreuzen.

## Patentansprüche

1. Werkzeug (1) zur spanabhebenden Bearbeitung eines Werkstücks, aufweisend:
- einen Werkzeugschaft (3) mit einer Mittelachse, die von einer Umfangsrichtung umgriffen ist, und ein Wirk-Ende (5),
- mindestens eine Hauptschneide (9),
- mindestens eine erste Nebenschneidennut (11.1), die die mindestens eine Hauptschneide (9) unter Ausbildung von mindestens einer ersten Nebenschneide (13.1) unterbricht, wobei die mindestens eine erste Nebenschneidennut (11.1) eine erste Nutsteigung aufweist,
- mindestens eine zweite Nebenschneidennut (11.2), die die mindestens eine Hauptschneide (9) unter Ausbildung von mindestens einer zweiten Nebenschneide (13.2) unterbricht, wobei die mindestens eine zweite Nebenschneidennut (11.1) eine von der ersten Nutsteigung verschiedene zweite Nutsteigung aufweist, wobei
- die mindestens eine erste Nebenschneidennut (11.1) und die mindestens eine zweite Nebenschneidennut (11.1) dieselbe mindestens eine Hauptschneide (9) unterbrechen.

2. Werkzeug (1) nach Anspruch 1, aufweisend:
- eine Mehrzahl von Hauptschneiden (9) als die mindestens eine Hauptschneide (9), die entlang der Umfangsrichtung voneinander beabstandet angeordnet sind,
- eine Mehrzahl von Hauptnuten (17), die entlang der Umfangsrichtung voneinander beabstandet angeordnet sind, wobei
- die Hauptnuten (17) und die Hauptschneiden (9) einander paarweise zugeordnet sind.

3. Werkzeug (1) nach einem der vorhergehenden Ansprüche, wobei
- die mindestens eine Hauptschneide (9) als die mindestens eine erste Nebenschneidennut (11.1) eine Mehrzahl von ersten Nebenschneidennuten (11.1) aufweist, wobei die Mehrzahl von ersten Nebenschneidennuten (11.1) entlang der Hauptschneide (9) beabstandet voneinander angeordnet ist, wobei
- die Hauptschneide (9) als die mindestens eine zweite Nebenschneidennut (11.2) eine Mehrzahl von zweiten Nebenschneidennuten (11.2) aufweist, wobei die Mehrzahl von zweiten Nebenschneidennuten (11.2) entlang der Hauptschneide (9) beabstandet voneinander angeordnet ist.

4. Werkzeug (1) nach einem der vorhergehenden Ansprüche, wobei
- der mindestens einen Hauptschneide (9) eine Freifläche (19.3) zugeordnet ist, wobei
- die Freifläche (19.3) in Umfangsrichtung ausgehend von der zugeordneten Hauptschneide (9) in Richtung der Mittelachse abfällt.

5. Werkzeug (1) nach einem der vorhergehenden Ansprüche, wobei sich die mindestens eine erste Nebenschneidennut (11.1) und die mindestens eine zweite Nebenschneidennut (11.2) auf der mindestens einen Hauptschneide (9) kreuzen.

6. Werkzeug (1) nach Anspruch 5, wobei sich die mindestens eine erste Nebenschneidennut (11.1) und die mindestens eine zweite Nebenschneidennut (11.2) derart kreuzen, dass mindestens eine erste Hauptschneidenspitze (10.1) gebildet ist, die bereichsweise von einer Spanfläche (19.1) der zugeordneten Hauptschneide (9) begrenzt ist.

7. Werkzeug (1) nach Anspruch 5 oder 6, wobei sich die mindestens eine erste Nebenschneidennut (11.1) und die mindestens eine zweite Nebenschneidennut (11.2) derart kreuzen, dass mindestens eine zweite Hauptschneidenspitze (10.2) gebildet ist, die bereichsweise von einer der Spanfläche (19.1) gegenüberliegenden und an die Freifläche (19.3) angrenzenden Rückfläche (19.2) der zugeordneten Hauptschneide (9) begrenzt ist.

8. Werkzeug (1) nach einem der Ansprüche 3 bis 7, wobei
- einer ersten Hauptschneide (9.1) der mindestens einen Hauptschneide (9) eine erste Folge (23. 1) von axial einander benachbarten Erstfolge-Nebenschneidennuten (12. 1), ausgewählt aus den ersten Nebenschneidennuten (11.1) und den zweiten Nebenschneidennuten (11.2), zugeordnet ist, wobei die Erstfolge-Nebenschneidennuten (12.1) in Axialrichtung mindestens durch einen ersten Nutabstand (25.1) voneinander beabstandet sind, wobei
- einer der ersten Hauptschneide (9.1) in Umfangsrichtung benachbarten zweiten Hauptschneide (9.2) der mindestens einen Hauptschneide (9) eine zweite Folge (23.2) von axial einander benachbarten Zweitfolge-Nebenschneidennuten (12.2), ausgewählt aus den ersten Nebenschneidennuten (11.1) und den zweiten Nebenschneidennuten (11.2), zugeordnet ist, wobei die Zweitfolge-Nebenschneidennuten (12.2) in Axialrichtung mindestens durch einen zweiten Nutabstand (25.2) voneinander beabstandet sind, und wobei
- die erste Folge (23.1) und die zweite Folge (23.2) in Axialrichtung um einen Versatzabstand (21) zueinander versetzt sind, wobei der Versatzabstand (21) kleiner ist als der erste Nutabstand (25.1) und der zweite Nutabstand (25.2).

9. Werkzeug (1) nach einem der vorhergehenden Ansprüche, wobei die mindestens eine Hauptschneide (9) aus dem Werkzeugschaft (3) unter Ausbildung der zugeordneten Hauptnut (17) herausgearbeitet ist.
